# EUROPÄISCHE PATENTSCHRIFT

(11) **EP 3 162 496 B1**
(45) Veröffentlichungstag und Bekanntmachung des Hinweises auf die Patenterteilung: **23.05.2018**
(21) Anmeldenummer: 16194634.8
(22) Anmeldetag: 19.10.2016
(51) Int. Cl.: B23P 11/02, F01L 1/047, B23P 11/00, B23P 19/02, F16D 1/06, F16B 4/00, F16H 53/02, F16D 1/08

(54) **VORRICHTUNG ZUM FÜGEN MEHRERER FUNKTIONSELEMENTE AUF EINER WELLE**
DEVICE FOR JOINING A NUMBER OF FUNCTIONAL ELEMENTS ON A SHAFT
DISPOSITIF D'ASSEMBLAGE DE PLUSIEURS ÉLÉMENTS FONCTIONNELS SUR UN ARBRE

(30) Priorität: 27.10.2015 DE 102015220981
(43) Veröffentlichungstag der Anmeldung: 03.05.2017
(73) Patentinhaber: Mahle International GmbH, 70376 Stuttgart (DE); Maschinenbau-Service- Automatisierungstechnik Chemnitz GmbH, 09116 Chemnitz (DE)
(72) Erfinder: MENONNA, Antonio, 71254 Ditzingen (DE); MORGENSTERN, Stefan, 09577 Niederwiesa (DE); SCHACHERER, Roland, 78187 Geisingen (DE)
(74) Vertreter: BRP Renaud & Partner mbB Rechtsanwälte Patentanwälte Steuerberater

(56) Entgegenhaltungen:
- EP-A1- 0 462 081
- CH-A1- 709 379
- DE-A1-102008 064 194
- DE-A1-102013 211 702
- JP-A- S6 076 931
- JP-A- 2000 061 749
- US-A1- 2014 245 582

## Beschreibung

Die vorliegende Erfindung betrifft eine Vorrichtung zum Fügen mehrerer, jeweils eine Ausnehmung für eine Welle aufweisender Funktionselemente auf der Welle, gemäß dem Oberbegriff des Anspruchs 1. Die Erfindung betrifft außerdem Verfahren zum Fügen von jeweils eine Ausnehmung aufweisenden Funktionselementen auf der Welle unter Verwendung einer solchen Vorrichtung. Eine Vorrichtung nach dem Oberbegriff des Anspruchs 1 ist aus der US 2014/245582 A1 bekannt. Zum Fügen von Funktionselementen, insbesondere von Nocken, auf einer Welle, insbesondere auf einem Nockenwellenrohr, müssen die Naben bzw. Ausnehmungen der einzelnen Funktionselemente zur Achse der Welle ausgerichtet werden. Sollen gleichzeitig mehrere Funktionselemente in einem Rutsch durch Einführen der Welle gefügt werden, müssen sämtliche Funktionselemente entsprechend ausgerichtet werden.
Aus der DE 10 2008 064 194 A1 ist eine hierfür geeignete Vorrichtung zur Positionierung mehrerer eine Ausnehmung für eine Welle aufweisender Funktionselemente, insbesondere Nocken, in einer vorbestimmten Winkelposition auf der Welle bekannt, wobei die Vorrichtung mehrere für jeweils ein Funktionselement bestimmte Aufnahmen aufweist. Die Aufnahmen sind dabei derart positionierbar, dass die Ausnehmung der Funktionselemente im Wesentlichen auf einer gemeinsamen Geraden liegen.
Aus der JP 2000-61749 A ist eine weitere Vorrichtung zur Positionierung mehrerer eine Ausnehmung für eine Welle aufweisender Funktionselemente, insbesondere Nocken, auf der Welle bekannt.
Nachteilig bei den aus dem Stand der Technik bekannten Vorrichtungen ist jedoch, dass diese üblicherweise entweder ein thermisches Fügen mit vergleichsweise geringer Kraft oder ein Fügen eines Presssitzes mit vergleichsweise hoher Kraft ausführen können.

Die vorliegende Erfindung beschäftigt sich mit dem Problem, eine Vorrichtung zum Fügen mehrerer eine Ausnehmung für eine Welle aufweisender Funktionselemente auf der Welle anzugeben, die insbesondere einen Montagevorgang flexibler gestaltet.

Dieses Problem wird erfindungsgemäß durch die Gegenstände der unabhängigen Ansprüche 1, 8 und 12 gelöst. Vorteilhafte Ausführungsformen sind Gegenstand der abhängigen Ansprüche.
Die vorliegende Erfindung betrifft den allgemeinen Gedanken, eine Vorrichtung zum Fügen mehrerer, jeweils eine Ausnehmung für eine Welle aufweisender Funktionselemente in einer vorbestimmten Winkelposition auf der Welle sowohl mit einem elektrischen Spindeltrieb, als auch mit einem Pneumatikkolben zum Verstellen eines verfahrbaren Führungsschlittens für die Welle auszustatten, so dass mit dieser Vorrichtung sowohl ein thermisches Fügen als auch das Herstellen eines Presssitzes möglich ist. Über den verfahrenbaren Führungsschlitten für die Welle kann diese von oben durch die Ausnehmungen der Funktionselemente eingeschoben werden. Durch die unabhängig voneinander einsetzbaren Antriebe für den Führungsschlitten kann somit eine Art Hybridvorrichtung geschaffen werden, bei welcher beispielsweise zum thermischen Fügen ausschließlich der Pneumatikkolben zum Verstellen des Führungsschlittens verwendet wird, während zum Herstellen eines Presssitze, bei dem ein deutlich höherer Kraftaufwand erforderlich ist, der elektrische Spindeltrieb eingesetzt wird. Mit der erfindungsgemäßen Vorrichtung ist es somit möglich, sowohl ein thermisches Fügen als auch, soweit erforderlich, einen Presssitz herzustellen, wodurch die erfindungsgemäße Vorrichtung hinsichtlich ihres Einsatzgebietes deutlich flexibler ist, als bisherige, aus dem Stand der Technik bekannte Vorrichtungen.
Bei einer vorteilhaften Weiterbildung der erfindungsgemäßen Lösung steht der Pneumatikkolben mit einer Oberseite des Führungsschlittens in Kontakt und ist zum Aufbringen einer maximalen ersten Einpresskraft ausgebildet. Der elektrische Spindeltrieb weist dabei zumindest zwei Spindeln auf, die den Führungsschlitten durchdringen und an einer Unterseite desselben jeweils einen Spindelkopf aufweisen. Der Führungsschlitten besitzt darüber hinaus im Bereich der beiden Spindelköpfe jeweils eine Anschlagskontur, die beabstandet zur Unterseite des Führungsschlittens angeordnet ist und an denen sich die Spindeln mit ihren Spindelköpfen abstützen, sofern eine die erste Einpresskraft überschreitende zweite Einpresskraft erforderlich ist. Mit der erfindungsgemäßen Vorrichtung ist es somit möglich, beispielsweise einen thermischen Fügesitz, der eine vergleichsweise geringe Einpresskraft bzw. lediglich eine Einführkraft, erfordert, auszuführen, wobei bei dem Auffädeln eines Funktionselementes mit einem Presssitz die vom Pneumatikkolben zur Verfügung gestellte maximale erste Einpresskraft nicht mehr ausreicht und in diesem Fall die vorzugsweise zwei Spindeln, die sich zuvor gleichförmig mit dem Pneumatikkolben bewegt haben, weitergedreht werden, so dass sich diese von einer Unterseite des Führungsschlittens lösen, bis sie jeweils an der zugehörigen Anschlagskontur anliegen und über diese den Führungsschlitten und darüber auch die Welle weiter nach unten drücken. Über die Spindeln lässt sich nun vergleichsweise einfach eine die erste Einpresskraft deutlich übersteigende zweite Einpresskraft aufbringen, welche beispielsweise zur Herstellung eines Presssitzes erforderlich ist.

Bei einer vorteilhaften Weiterbildung der Erfindung ist vorgesehen, dass der Pneumatikkolben mit einer Oberseite des Führungsschlittens in Kontakt steht und zum Aufbringen einer maximalen ersten Einpresskraft auf den Führungsschlitten ausgebildet ist. Der elektrische Spindeltrieb weist dabei mindestens zwei Spindeln aufweist, die den Führungsschlitten durchdringen und an einer Unterseite des Führungsschlittens jeweils einen Spindelkopf aufweisen. Der elektrische Spindeltrieb kann somit in eine Fügeendposition gefahren werden und als Endanschlag für den Führungsschlitten dienen. In diesem Fall entfällt natürlich die Anschlagskontur. Die Spindeln fahren in diesem Betriebsmodus exakt auf die spätere Endposition und damit dem Pneumatikkolben voraus und dienen lediglich als Endanschlag. Der Führungsschlitten stützt sich demnach nicht auf den Spindelköpfen ab. Der Führungsschlitten wird ausschließlich von dem Pneumatikkolben vorgetrieben und abgeschaltet, sobald er den durch die vorausgefahrenen Spindelköpfe definierten Endanschlag erreicht. Zu diesem Zeitpunkt wird die maximale Einpresskraft am Pneumatikkolben überschritten. Damit ist dies ein failsafe Endschlag, der dynamisch eingestellt werden kann, z.B. wenn nacheinander zwei nebeneinander liegende Nockenwellen (Haubenmodul) gefügt werden, die unterschiedliche Wellenendlagen haben. Zudem kann damit die Toleranz der Endlage dynamisch nachgeführt werden, wenn es im System eine Veränderung (Wärmedehnungen etc.) gibt.

Bei einer vorteilhaften Weiterbildung der erfindungsgemäßen Lösung sind zumindest zwei Führungsstangen zum Führen des Führungsschlittens vorgesehen, die parallel zu den Spindeln und parallel zum Pneumatikkolben verlaufen. Der Führungsschlitten ist somit nicht ausschließlich über die zumindest zwei Spindeln geführt, sondern zusätzlich über die zumindest zwei Führungsstangen, wodurch ein besonders exaktes Führen des Führungsschlittens und damit auch ein besonders exaktes Einführen der Welle in die Ausnehmungen der Funktionselemente erreicht werden kann. Die Führungsstangen sind dabei fest mit dem Führungsschlitten verbunden und vertikal verschieblich in zumindest einem Querträger der Vorrichtung geführt. Vorzugsweise sind die Führungsstangen sogar in zwei zueinander beabstandete und übereinander angeordnete Querträger der Vorrichtung vertikal verschieblich geführt, wodurch eine besonders exakte Führung erreicht werden kann.

Bei einer weitere vorteilhaften Ausführungsform der erfindungsgemäßen Lösung ist eine Detektionseinrichtung vorgesehen, die derart ausgebildet ist, dass sie die Vorrichtung abschaltet, sofern die maximale erste Einpresskraft überschritten wird und/oder sobald sich die Spindelköpfe von einer Unterseite des Führungsschlittens lösen. Soll beispielsweise die Vorrichtung lediglich zum Herstellen einer thermischen Fügeverbindung zwischen den Funktionselementen und der Welle eingesetzt werden, so ist eine derartige Detektionseinrichtung von großem Vorteil, da sie ein Verkanten der Welle, beispielsweise bei einer ungenauen Zuführung der Welle auf eine Ausnehmung eines Funktionselementes, sofort erkennt und daraufhin die Vorrichtung abschaltet. Üblicherweise wird beim thermischen Fügen lediglich eine vergleichsweise geringe Einpresskraft bzw. Einführkraft benötigt, so dass bei einem Überschreiten der maximal hierfür erforderlichen ersten Einpresskraft bzw. Einführkraft von einem Verblocken bzw. Verkanten der Welle auszugehen ist. Um dabei Beschädigungen der Welle und/oder der Funktionselemente unterbinden zu können, schaltet die Detektionseinrichtung die Vorrichtung unmittelbar ab, sofern die maximale erste Einpresskraft überschritten wird und/oder der Führungsschlitten die Endlage nicht erreicht. Bei einem Überschreiten der maximal vom Pneumatikkolben auf den Führungsschlitten ausübbaren maximalen ersten Einpresskraft, drehen sich die beiden Spindeln jedoch weiter, wodurch sich deren Spindelköpfe von der Unterseite des Führungsschlittens abheben. Dieses Abheben könnte ebenfalls, beispielsweise über einen elektrischen Kontakt, zu einem Abschalten der Vorrichtung führen, da die Detektionseinrichtung beispielsweise das Lösen der Spindelköpfe von der Unterseite des Führungsschlittens, insbesondere durch Öffnen eines elektrischen Kontaktes, unmittelbar erfassen kann. Dies kann zusätzlich oder alternativ zur Überwachung der ersten Einpresskraft erfolgen.

Die vorliegende Erfindung beruht weiter auf dem allgemeinen Gedanken, ein Verfahren zum Fügen von jeweils eine Ausnehmung aufweisender Funktionselemente auf einer Welle mittels der zuvor beschriebenen Vorrichtung zur Herstellung einer Steuerwelle anzugeben, bei welchem zunächst die einzelnen Funktionselemente vertikal übereinander angeordnet und zumindest bezüglich ihrer Drehwinkellage ausgerichtet und fixiert werden. Die Anordnung der einzelnen Funktionselemente erfolgt dabei derart, dass deren Ausnehmungen üblicherweise fluchtend zueinander angeordnet sind und ein Einführen der Welle von oben mittels des verfahrbaren Führungsschlittens ermöglichen. Bis zum Erreichen der maximalen ersten Einpresskraft verstellt dabei der Pneumatikkolben den Führungsschlitten sowie die daran angeordnete Welle, während bei einem Überschreiten der maximalen ersten Einpresskraft die Spindeln die weitere Verstellung des Führungsschlittens übernehmen, da sich deren Spindelköpfe dann von der Unterseite des Führungsschlittens lösen und so weit weiter verstellt werden, bis sie an den Anschlägen anliegen, und über diese dann das weitere Einpressen der Welle in die Funktionselemente, beispielsweise zur Herstellung eines Presssitzes, übernehmen. Hierdurch ist mit der erfindungsgemäßen Vorrichtung sowohl das vergleichsweise kraftarme Herstellen eines thermischen Fügesitzes, als auch die hierzu deutlich kraftaufwendigere Herstellung eines Presssitzes möglich.

Bei einer vorteilhaften Weiterbildung des erfindungsgemäßen Verfahrens schaltet eine Detektionseinrichtung die Vorrichtung ab, sofern die maximale Einpresskraft überschritten wird und/oder sich die Spindelköpfe von der Unterseite des Führungsschlittens lösen. Hierdurch kann beispielsweise vergleichsweise einfach sichergestellt werden, dass bei einem reinen thermischen Fügevorgang, bei welchem eine lediglich vergleichsweise kleine Einpresskraft bzw. Einführkraft erforderlich ist, die Vorrichtung unmittelbar abschaltet, sofern beispielsweise die Welle an einem der Funktionselemente anstößt bzw. dort verkantet. Da sich bis zum Erreichen der maximal ersten Einpresskraft der Pneumatikkolben und die Spindeln gleichförmig bewegen, liegen in diesem Bereich die Spindelköpfe auch stets an einer Unterseite des Führungsschlittens an. Wird die maximal durch den Pneumatikkolben auf den Führungsschlitten aufbringbare erste Einpresskraft überschritten, drehen sich die Spindeln weiter, wodurch sich deren Spindelköpfe von der Unterseite des Führungsschlittens lösen. Dies kann zusätzlich oder alternativ zum Überwachen der Einpresskraft das Lösen eines elektrischen Kontaktes bewirken, welcher von der Detektionseinrichtung erfasst wird, woraufhin diese die Vorrichtung abschaltet. Dadurch kann insbesondere ein thermischer Fügevorgang besonders exakt überwacht werden.

Bei einer alternativen Ausführungsform des erfindungsgemäßen Verfahrens schaltet die Detektionseinrichtung die Vorrichtung nicht ab, sofern die maximal erste Einpresskraft überschritten wird und/oder sich die Spindelköpfe von der Unterseite des Führungsschlittens lösen, so dass sich die Spindeln in diesem Fall weiter drehen, bis sie mit ihren Spindelköpfen an dem jeweiligen Anschlag anliegen. Die Spindeln drücken in diesem Fall mit ihren Spindelköpfen den Führungsschlitten über die Anschläge bis zu einer vordefinierten maximalen zweiten Einpresskraft und/oder einem vordefinierten Verstellweg weiter. Ein derartiges Verfahren ist beispielsweise bei einem kombinierten thermischen Füge- und Pressverfahren denkbar, bei welchem sowohl ein thermischer Fügesitz als auch an einem weiteren Funktionselement ein Presssitz hergestellt werden soll. Sollen beispielsweise auf eine Welle eine Reihe von Funktionselementen mittels thermischem Fügesitz und beispielsweise ein zuunterst angeordnetes Funktionselement mittels Presssitz aufgepresst werden, so verfährt die erfindungsgemäße Vorrichtung den Führungsschlitten zunächst durch die lediglich mittels thermischem Fügesitz zu fügenden Funktionselemente mittels des Pneumatikkolbens, wobei sich in diesem Bereich die Spindeln lediglich gleichförmig mit dem Pneumatikkolben bzw. dem Führungsschlitten bewegen, ohne jedoch Kraft auf den Führungsschlitten auszuüben. Erreicht die Welle das zuunterst angeordnete Funktionselement, welches mittels Presssitz auf der Welle gefügt werden soll, steigt die erforderliche Einpresskraft schlagartig an und überschreitet die maximal seitens des Pneumatikkolbens aufbringbare erste Einpresskraft, woraufhin der Führungsschlitten stillsteht und sich die Spindeln weiter drehen. Diese drehen sich so weit weiter, bis deren Spindelköpfe an den jeweiligen Anschlägen anliegen, um über diese dann den Führungsschlitten und die Welle weiter nach unten und in das zuunterst angeordnete Funktionselement hineinzupressen. Mit einem derartigen erfindungsgemäßen Verfahren und mit der erfindungsgemäßen Vorrichtung sind somit auch kombinierte Fügeverfahren vergleichsweise einfach herzustellen.
Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.
Dabei zeigen, jeweils schematisch
- Fig. 1: eine erfindungsgemäße Vorrichtung zum Fügen mehrerer, jeweils eine Ausnehmung für eine Welle aufweisender Funktionselemente auf der Welle in einer Ausgangsstellung,
- Fig. 2: eine Darstellung wie in Fig. 1, jedoch bei einer Stellung, bei welcher die Welle zumindest teilweise in die Funktionselemente eingeschoben ist und bei welcher der Führungsschlitten ausschließlich über einen Pneumatikkolben verstellt wird,
- Fig. 3: eine Darstellung wie in Fig. 2, jedoch bei einem Verkanten der Welle an den Funktionselementen,
- Fig. 4: die erfindungsgemäße Vorrichtung in einem Zustand, bei welchem die Welle über den Führungsschlitten ausschließlich über den Spindeltrieb verstellt wird.

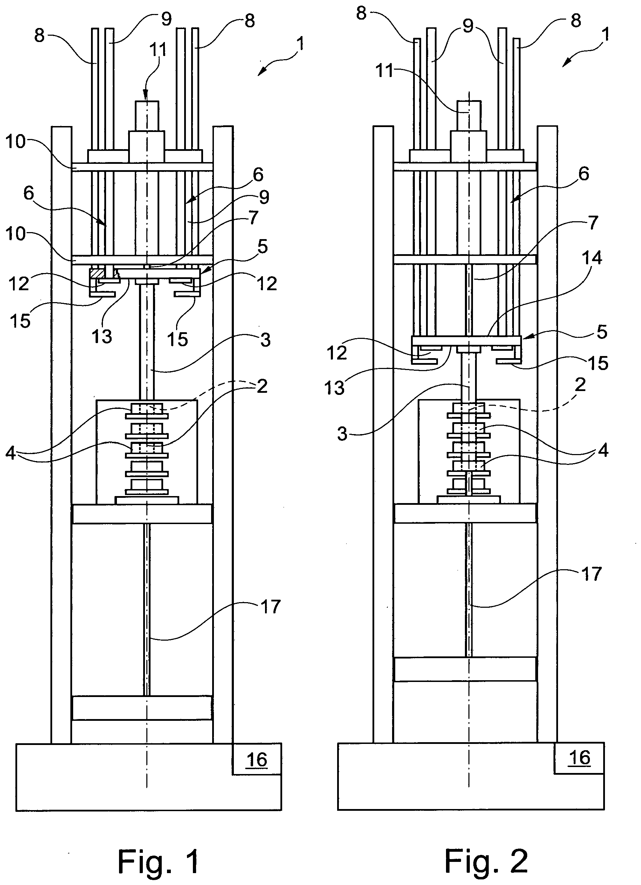

Entsprechend den Fig. 1 bis 4, weist eine erfindungsgemäße Vorrichtung 1 zum Fügen mehrerer, jeweils eine Ausnehmung 2 für eine Welle 3 aufweisender Funktionselemente 4, beispielsweise Nocken, Ausgleichsmassen, Zahnräder und/oder Lager, in einer vorbestimmten Winkelposition auf der Welle 3, einen verfahrbaren Führungsschlitten 5 für die Welle 3 auf, mittels welchem die Welle 3 von oben durch die Ausnehmungen 2 der vertikal übereinander angeordneten Funktionselemente 4 einschiebbar ist. Erfindungsgemäß sind nun zum Verstellen des Führungsschlittens 5 und damit auch zum Verstellen der Welle 3 ein elektrischer Spindeltrieb 6 sowie ein Pneumatikkolben 7 vorgesehen. Der Führungsschlitten 5 kann somit wahlweise mit dem Pneumatikkolben 7 oder dem Spindeltrieb 6 verstellt werden.

Zusätzlich sind zumindest zwei Führungsstangen 8 zum Führen des Führungsschlittens 5 vorgesehen, die parallel zu Spindeln 9 des Spindeltriebs 6 und parallel zum Pneumatikkolben 7 verlaufen. Die Führungsstangen 8 sind dabei fest mit dem Führungsschlitten 5 verbunden und vertikal verschieblich in zumindest einem, hier in zwei übereinander angeordneten Querträgern 10 der Vorrichtung 1 geführt, wodurch eine besonders exakte Führung des Führungsschlittens 5 und damit auch eine besonders exakte Führung der Welle 3 ermöglicht wird.

Betrachtet man den Führungsschlitten 5 der erfindungsgemäßen Vorrichtung 1 genauer, so kann man erkennen, dass der Pneumatikkolben 7 mit einer Oberseite 14 des Führungsschlittens 5 in Kontakt steht, wobei der Pneumatikkolben 7 zusätzlich zum Aufbringen einer maximalen ersten Einpresskraft bzw. Einführkraft ausgebildet ist. Der elektrische Spindeltrieb 6 weist einen Elektromotor 11 auf, über welchen die beiden Spindeln 9 des Spindeltriebs 6 angetrieben werden. Die beiden Spindeln 9 des Spindeltriebs 6 durchdringen dabei den Führungsschlitten 5 und weisen an einer Unterseite 13 des Führungsschlittens 5 jeweils einen Spindelkopf 12 auf. Der Führungsschlitten 5 selbst besitzt im Bereich der beiden Spindelköpfe 12 jeweils eine Anschlagskontur 15, die beabstandet zur Unterseite 13 des Führungsschlittens 5 angeordnet ist und an denen sich die beiden Spindeln 9 mit ihren jeweiligen Spindelköpfen 12 abstützen, sofern eine die erste Einpresskraft überschreitende zweite Einpresskraft erforderlich ist. Die Anschlagskonturen 15 bzw. die Anschläge sind dabei als Hakenkonturen oder Töpfe ausgebildet.

Generell können die Spindelköpfe 12 der Spindeln 9 auch als Endanschläge dienen, wobei in diesem Fall der Pneumatikkolben 7 mit einer Oberseite 14 des Führungsschlittens 5 in Kontakt steht und zum Aufbringen einer maximalen ersten Einpresskraft auf den Führungsschlitten 5 ausgebildet ist. Der elektrische Spindeltrieb 6 weist dabei mindestens zwei Spindeln 9 aufweist, die den Führungsschlitten 5 durchdringen und an einer Unterseite 13 des Führungsschlittens 5 jeweils einen Spindelkopf 12 aufweisen. Der elektrische Spindeltrieb 6 kann dabei in eine Fügeendposition gefahren werden und als Endanschlag für den Führungsschlitten 5 dienen. In diesem Fall entfällt natürlich die Anschlagskontur 15. Die Spindeln 9 fahren in diesem Betriebsmodus exakt auf die spätere Endposition und damit dem Pneumatikkolben 7 voraus und dienen lediglich als Endanschlag. Der Führungsschlitten 5 stützt sich demnach nicht auf den Spindelköpfen 12 ab. Der Führungsschlitten 5 wird ausschließlich von dem Pneumatikkolben 7 vorgetrieben und abgeschaltet, sobald er den durch die vorausgefahrenen Spindelköpfe 12 definierten Endanschlag erreicht. Zu diesem Zeitpunkt wird die maximale Einpresskraft am Pneumatikkolben 7 überschritten. Damit ist dies ein failsafe Endschlag, der dynamisch eingestellt werden kann, z.B. wenn nacheinander zwei nebeneinander liegende Nockenwellen (Haubenmodul) gefügt werden, die unterschiedliche Wellenendlagen haben. Zudem kann damit die Toleranz der Endlage dynamisch nachgeführt werden, wenn es im System eine Veränderung (Wärmedehnungen etc.) gibt.

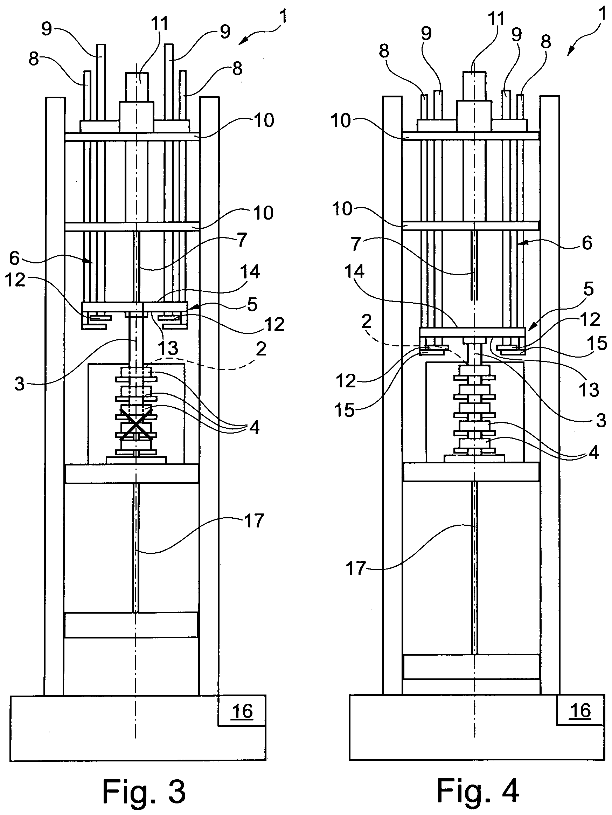

Zusätzlich vorgesehen sein kann eine Detektionseinrichtung 16, die derart ausgebildet ist, dass sie die Vorrichtung 1 abschaltet, sofern die maximale erste Einpresskraft des Pneumatikkolbens 7 überschritten wird und/oder sofern sich die Spindelköpfe 12 in der Spindel 9 von der Unterseite 13 des Führungsschlittens 5 lösen bzw. abheben. Letzteres kann beispielsweise durch das Öffnen eines elektrischen Kontaktes vergleichsweise einfach detektiert werden, wogegen die maximale erste Einpresskraft beispielsweise mittels eines entsprechenden Sensors überwacht werden kann. Eine derartige Detektionseinrichtung 16 ist von besonderem Vorteil, sofern mit der erfindungsgemäßen Vorrichtung 1 lediglich ein thermisches Fügen der Funktionselemente 4 auf der Welle 3 erfolgen soll, wofür üblicherweise eine lediglich vergleichsweise geringe Einpresskraft erforderlich ist. Wird die hierfür maximal erforderliche maximale erste Einpresskraft überschritten, beispielsweise ausgelöst durch ein Verkanten der Welle 3 an einem der Funktionselemente 4, wie dies in Fig. 3 dargestellt ist, so führt dies nicht nur zu einem Überschreiten der maximalen ersten Einpresskraft, sondern durch ein Weiterdrehen der beiden Spindeln 9 auch zu einem Abheben deren Spindelköpfe 12 von der Unterseite 13 des Führungsschlittens. Beide Effekte können dabei kumulativ oder alternativ überwacht werden. Da ein derartiges Verkanten der Welle 3 an den Funktionselementen 4 zu Schädigungen führen könnte, schaltet die Detektionseinrichtung 16 in diesem Fall die Vorrichtung 1 ab. Bis zu einem derartigen Verkanten erfolgt ein Verstellen des Führungsschlittens 5 und damit auch ein Verstellen der Welle 3 ausschließlich über den Pneumatikkolben 7, welcher Teil eines pneumatischen Kolben-Zylinderaggregates ist, während sich die Spindeln 9 des Spindeltriebes 6 lediglich ohne eine Kraft aufzubringen gleichförmig mitdrehen. In diesem Fall liegen somit die Spindelköpfe 12 der Spindeln 9 stets an der Unterseite 13 des Führungsschlittens 5 an, wie dies beispielsweise gemäß der Fig. 2 dargestellt ist. Der zurückgelegte Verstellweg der Spindeln 9 und des Pneumatikkolbens 7 muss dabei gleich sein.

Bei der gemäß der Fig. 3 dargestellten Situation, bei welcher es sich beispielsweise um ein Verkanten der Welle 3 an einem der Führungselemente 4 handeln kann, kann somit die Detektionseinrichtung 16 die Vorrichtung 1 abschalten, um Beschädigungen zu vermeiden. Denkbar ist hierbei aber auch, dass es sich in diesem Fall nicht um ein Verkanten handelt, sondern dass eines der unteren Funktionselemente 4 zusätzlich oder alternativ zum thermischen Fügen über einen Presssitz mit der Welle 3 gefügt werden soll, wofür selbstverständlich höhere Kräfte erforderlich sind. In diesem Fall würde die Detektionseinrichtung 16 die Vorrichtung 1 nicht abschalten, so dass die Spindeln 9 weiterdrehen, bis deren Spindelköpfe 12 an den Anschlagskonturen 15 (vgl. Fig. 4) anliegen und über diese eine weitere Krafteinleitung bzw. ein weiteres Verstellen der Welle 3 bewirken können. Ein derartiger Spindeltrieb 6 ermöglicht dabei das Aufbringen von deutlich höheren Einpresskräften als der Pneumatikkolben 7. Das Verkanten der Welle 3 bzw. das Erreichen des mit Presssitz zu fügenden Funktionselementes 4 ist in Fig. 3 mit einem dicken Kreuz gekennzeichnet.

Zur Führung der Welle 3 kann selbstverständlich auch noch eine Zentrierstange 17 mit beispielsweise einer Zentrierspitze verwendet werden, welche in die üblicherweise rohrförmige Welle 3 eingeführt wird.

Mit der erfindungsgemäßen Vorrichtung 1 kann somit erstmals eine Hybridvorrichtung geschaffen werden, die mittels zweier unterschiedlicher Antriebssysteme, nämlich einmal die im Pneumatikkolben 7 und einmal im Spindeltrieb 6 ein Verstellen des Führungsschlittens 5 mit unterschiedlichen Einpresskräften bewirken kann. Das Einsatzgebiet einer derartigen Vorrichtung 1 ist somit deutlich breiter als bei bisher aus dem Stand der Technik bekannten Vorrichtungen.

## Patentansprüche

1. Vorrichtung (1) zum Fügen mehrerer, jeweils eine Ausnehmung (2) für eine Welle (3) aufweisender Funktionselemente (4), insbesondere Nocken, Ausgleichsmassen, Zahnräder und/oder Lager, in einer vorbestimmten Winkelposition auf der Welle (3), mit einem verfahrbaren Führungsschlitten (5) für die Welle (3), mittels welchem die Welle (3) von oben durch die Ausnehmungen (2) der Funktionselemente (4) einschiebbar ist,
**dadurch gekennzeichnet,**
**dass** zum Verstellen des Führungsschlittens (5) ein elektrischer Spindeltrieb (6) und ein Pneumatikkolben (7) vorgesehen sind.

2. Vorrichtung nach Anspruch 1,
**dadurch gekennzeichnet,**
- **dass** der Pneumatikkolben (7) mit einer Oberseite (14) des Führungsschlittens (5) in Kontakt steht und zum Aufbringen einer maximalen ersten Einpresskraft auf den Führungsschlitten (5) ausgebildet ist,
- **dass** der elektrische Spindeltrieb (6) mindestens zwei Spindeln (9) aufweist, die den Führungsschlitten (5) durchdringen und an einer Unterseite (13) des Führungsschlittens (5) jeweils einen Spindelkopf (12) aufweisen,
- **dass** der elektrische Spindeltrieb (6) als Endanschlag für den Führungsschlitten (5) dient

3. Vorrichtung nach Anspruch 1 oder 2,
**dadurch gekennzeichnet,**
- **dass** der Pneumatikkolben (7) mit einer Oberseite (14) des Führungsschlittens (5) in Kontakt steht und zum Aufbringen einer maximalen ersten Einpresskraft ausgebildet ist,
- **dass** der elektrische Spindeltrieb (6) mindestens zwei Spindeln (9) aufweist, die den Führungsschlitten (5) durchdringen und an einer Unterseite (13) des Führungsschlittens (5) jeweils einen Spindelkopf (12) aufweisen,
- **dass** der Führungsschlitten (5) im Bereich der beiden Spindelköpfe (12) jeweils eine Anschlagskontur (15) aufweist, die beabstandet zur Unterseite (13) des Führungsschlittens (5) angeordnet ist und an denen sich die beiden Spindeln (9) mit ihren Spindelköpfen (12) abstützen, sofern eine die erste Einpresskraft überschreitende zweite Einpresskraft erforderlich ist.

4. Vorrichtung nach Anspruch 2 oder 3,
**dadurch gekennzeichnet,**
**dass** mindestens zwei Führungsstangen (8) zum Führen des Führungsschlittens (5) vorgesehen sind, die parallel zu den Spindeln (9) und parallel zum Pneumatikkolben (7) verlaufen.

5. Vorrichtung nach Anspruch 4,
**dadurch gekennzeichnet,**
**dass** die Führungsstangen (8) fest mit dem Führungsschlitten (5) verbunden und vertikal verschieblich in zumindest einem Querträger (10) der Vorrichtung (1) geführt sind.

6. Vorrichtung nach einem der Ansprüche 2 bis 5,
**dadurch gekennzeichnet,**
**dass** die Anschlagskonturen (15) als Hakenkonturen oder Töpfe ausgebildet sind.

7. Vorrichtung nach einem der Ansprüche 1 bis 6,
**dadurch gekennzeichnet,**
**dass** eine Detektionseinrichtung (16) vorgesehen ist, die derart ausgebildet ist, dass sie die Vorrichtung (1) abschaltet, sofern die maximale erste Einpresskraft überschritten wird und/oder der Führungsschlitten (5) die Endlage nicht erreicht.

8. Verfahren zum Fügen von jeweils eine Ausnehmung (2) aufweisenden Funktionselementen (4), insbesondere Nocken, Ausgleichsmassen, Zahnrädern und/oder Lagern, auf einer Welle (3) mittels einer Vorrichtung (1) nach einem der Ansprüche 1 bis 7, zur Herstellung einer Steuerwelle,
- bei dem die Funktionselemente (4) vertikal übereinander angeordnet und ausgerichtet und fixiert werden,
- bei dem die Welle (3) vertikal von oben mittels des verfahrbaren Führungsschlittens (5) durch die Ausnehmungen (2) der Funktionselemente (4) eingeschoben wird,
- wobei bis zum Erreichen der maximalen ersten Einpresskraft der Pneumatikkolben (7) den Führungsschlitten (5) und die daran angebundene Welle (3) verstellt,
- wobei bei einem Überschreiten der maximalen ersten Einpresskraft die Spindeln (9) die weitere Verstellung des Führungsschlittens (5) und der Welle (3) übernehmen.

9. Verfahren nach Anspruch 8,
**dadurch gekennzeichnet,**
- **dass** bis zum Erreichen der maximalen ersten Einpresskraft der Pneumatikkolben (7) und die Spindeln (9) gleichförmig verfahren werden, wobei die Spindeln (9) keine Einpresskraft auf den Führungsschlitten (5) ausüben,
- **dass** sich bei einem Überschreiten der maximalen ersten Einpresskraft die Spindeln (9) weiterdrehen, sodass sich ihr jeweiliger Spindelkopf (12) von der Unterseite (13) des Führungsschlittens (5) löst.

10. Verfahren nach Anspruch 9,
**dadurch gekennzeichnet,**
**dass** die Detektionseinrichtung (16) die Vorrichtung (1) abschaltet, sofern die maximale erste Einpresskraft überschritten wird und/oder sich die Spindelköpfe (12) von der Unterseite (13) des Führungsschlittens (5) abheben.

11. Verfahren nach Anspruch 9,
**dadurch gekennzeichnet,**
- **dass** die Detektionseinrichtung (16) die Vorrichtung (1) nicht abschaltet, sofern die maximale erste Einpresskraft überschritten wird und/oder sich die Spindelköpfe (12) von der Unterseite (13) des Führungsschlittens (5) lösen, sodass sich die Spindeln (9) weiterdrehen, bis sie mit ihren Spindelköpfen (12) an der jeweiligen Anschlagskontur (15) anliegen,
- **dass** die Spindeln (9) mit ihren Spindelköpfen (12) den Führungsschlitten (5) über die Anschlagskonturen (15) bis zu einer vordefinierten maximalen zweiten Einpresskraft und/oder einem vordefinierten Verstellweg, weiterdrücken.

12. Verfahren zum Fügen von jeweils eine Ausnehmung (2) aufweisenden Funktionselementen (4), insbesondere Nocken, Ausgleichsmassen, Zahnrädern und/oder Lagern, auf einer Welle (3) mittels einer Vorrichtung (1) nach einem der Ansprüche 1 bis 7, zur Herstellung einer Steuerwelle, bei dem
- die Spindeln (9) in eine vordefinierte Endlage gefahren werden,
- die Funktionselemente (4) vertikal übereinander angeordnet und ausgerichtet und fixiert werden,
- die Welle (3) vertikal von oben mittels des verfahrbaren Führungsschlittens (5) durch die Ausnehmungen (2) der Funktionselemente (4) eingeschoben wird,
- bis zum Erreichen der maximalen ersten Einpresskraft der Pneumatikkolben (7) den Führungsschlitten (5) und die daran angebundene Welle (3) verstellt.

## Claims

1. Device (1) for joining a plurality of functional elements (4) in each case having a recess (2) for a shaft (3), in particular cams, balancing masses, gear wheels and/or bearings, in a predetermined angular position on the shaft (3), with a movable guide carriage (5) for the shaft (3), by means of which the shaft (3) can be inserted from above through the recesses (2) of the functional elements (4),
**characterised in that**
an electrical spindle drive (6) and a pneumatic piston (7) are provided for adjusting the guide carriage (5).

2. Device according to claim 1,
**characterised in that**
- the pneumatic piston (7) is in contact with an upper side (14) of the guide carriage (5) and is designed to apply a maximum first press-in force on the guide carriage (5),
- the electrical spindle drive (6) has at least two spindles (9), which pass through the guide carriage (5) and have in each case a spindle head (12) on a lower side (13) of the guide carriage (5),
- the electrical spindle drive (6) serves as an end stop for the guide carriage (5).

3. Device according to claim 1 or 2,
**characterised in that**
- the pneumatic piston (7) is in contact with an upper side (14) of the guide carriage (5) and is designed to apply a maximum first press-in force,
- the electrical spindle drive (6) has at least two spindles (9), which pass through the guide carriage (5) and have in each case a spindle head (12) on a lower side (13) of the guide carriage (5),
- in the area of the two spindle heads (12) the guide carriage (5) has in each case a stop contour (15), that is arranged spaced apart from the lower side (13) of the guide carriage (5) and on which the two spindles (9) with their spindle heads (12) are supported, if a second press-in force exceeding the first press-in force is required.

4. Device according to claim 2 or 3,
**characterised in that**
at least two guide rods (8) are provided for guiding the guide carriage (5), which guide rods run parallel to the spindles (9) and parallel to the pneumatic piston (7)

5. Device according to claim 4
**characterised in that**
the guide rods (8) are fixedly connected to the guide carriage (5) and are guided vertically displaceably in at least one transverse beam (10) of the device (1).

6. Device according to any one of claims 2 to 5,
**characterised in that**
the stop contours (15) are designed as hook contours or pots.

7. Device according to any one of claims 1 to 6,
**characterised in that**
a detection device (16) is provided, that is designed in such a manner that it shuts off the device (1), if the maximum first press-in force is exceeded and/or the guide carriage (5) does not reach the end position.

8. Method for joining functional elements (4) having in each case a recess (2), in particular, cams, balancing masses, gear wheels and/or bearings, on a shaft (3) by means of a device (1) according to any one of claims 1 to 7, for producing a control shaft,
- in which the functional elements (4) are arranged and aligned and fixed vertically above one another,
- in which the shaft (3) is inserted through the recesses (2) of the functional elements (4) vertically from above by means of the movable guide carriage (5),
- wherein until the maximum first press-in force is reached, the pneumatic piston (7) adjusts the guide carriage (5) and the shaft (3) connected thereto,
- wherein when the maximum first press-in force is exceeded the spindles (9) undertake the further adjustment of the guide carriage (5) and of the shaft (3).

9. Method according to claim 8,
**characterised in that**
- until reaching the maximum first press-in force the pneumatic piston (7) and the spindles (9) are moved uniformly, wherein the spindles (9) exert no press-in force on the guide carriage (5),
- when the maximum first press-in force is exceeded the spindles (9) rotate further, so that their respective spindle head (12) is released from the lower side (13) of the guide carriage (5).

10. Method according to claim 9,
**characterised in that**
the detection device (16) shuts off the device (1), if the maximum first press-in force is exceeded and/or the spindle heads (12) are lifted from the lower side (13) of the guide carriage (5).

11. Method according to claim 9,
**characterised in that**
- the detection device (16) does not shut off the device (1), if the maximum first press-in force is exceeded and/or the spindle heads (12) are released from the lower side (13) of the guide carriage (5), so that the spindles (9) are rotated further, until they abut against the respective stop contour (15) with their spindle heads (12),
- the spindles (9) press the guide carriage (5) further with their spindle heads (12) via the contact contours (15) up to a predefined maximum second press-in force and/or a predefined adjustment path.

12. Method for joining functional elements (4) having in each case a recess (2), in particular, cams, balancing masses, gear wheels and/or bearings, on a shaft (3) by means of a device (1) according to any one of claims 1 to 7, for producing a control shaft, in which
- the spindles (9) are driven into a predefined end position,
- the functional elements (4) are arranged and aligned and fixed vertically above one another,
- the shaft (3) is inserted through the recesses (2) of the functional elements (4) vertically from above by means of the movable guide carriage (5),
- until reaching the maximum first press-in force the pneumatic piston (7) adjusts the guide carriage (5) and the shaft (3) connected thereto.

## Revendications

1. Dispositif (1) pour l'assemblage de plusieurs éléments fonctionnels (4) présentant respectivement un évidement (2) pour un arbre (3), en particulier des cames, masses de compensation, roues dentées et/ou paliers, dans une position angulaire prédéterminée sur l'arbre (3), avec un chariot de guidage (5) mobile pour l'arbre (3), au moyen duquel l'arbre (3) est insérable par le dessus par les évidements (2) des éléments fonctionnels (4),
**caractérisé en ce que**
pour le déplacement du chariot de guidage (5) un mécanisme à broche (6) électrique et un piston pneumatique (7) sont prévus.

2. Dispositif selon la revendication 1,
**caractérisé en ce que**
- le piston pneumatique (7) est en contact avec un côté supérieur (14) du chariot de guidage (5) et est réalisé pour l'application d'une première force d'enfoncement maximale sur le chariot de guidage (5),
- le mécanisme à broche (6) électrique présente au moins deux broches (9) qui traversent le chariot de guidage (5) et présentent sur un côté inférieur (13) du chariot de guidage (5) respectivement une tête de broche (12),
- le mécanisme à broche (6) électrique sert de butée finale pour le chariot de guidage (5).

3. Dispositif selon la revendication 1 ou 2,
**caractérisé en ce que**
- le piston pneumatique (7) est en contact avec un côté supérieur (14) du chariot de guidage (5) et est réalisé pour l'application d'une première force d'enfoncement maximale,
- le mécanisme à broche (6) électrique présente au moins deux broches (9) qui traversent le chariot de guidage (5) et présentent sur un côté inférieur (13) du chariot de guidage (5) respectivement une tête de broche (12),
- le chariot de guidage (5) présente dans la zone des deux têtes de broche (12) respectivement un contour de butée (15) qui est agencé de manière espacée au côté inférieur (13) du chariot de guidage (5) et contre lesquels les deux broches (9) s'appuient avec leurs têtes de broche (12) dans la mesure où une seconde force d'enfoncement dépassant la première force d'enfoncement est nécessaire.

4. Dispositif selon la revendication 2 ou 3,
**caractérisé en ce que**
au moins deux tiges de guidage (8) sont prévues pour le guidage du chariot de guidage (5) qui s'étendent parallèlement aux broches (9) et parallèlement au piston pneumatique (7).

5. Dispositif selon la revendication 4,
**caractérisé en ce que**
les tiges de guidage (8) sont reliées fixement au chariot de guidage (5) et sont guidées de manière verticalement mobile dans au moins une traverse (10) du dispositif (1).

6. Dispositif selon l'une quelconque des revendications 2 à 5,
**caractérisé en ce que**
les contours de butée (15) sont réalisés comme des contours à crochet ou pots.

7. Dispositif selon l'une quelconque des revendications 1 à 6,
**caractérisé en ce que**
un dispositif de détection (16) est prévu, lequel est réalisé de manière à éteindre le dispositif (1) dans la mesure où la première force d'enfoncement maximale est dépassée et/ou le chariot de guidage (5) n'atteint pas la position finale.

8. Procédé d'assemblage d'éléments fonctionnels (4) présentant respectivement un évidement (2), en particulier des cames, masses de compensation, roues dentées et/ou paliers, sur un arbre (3) au moyen d'un dispositif (1) selon l'une quelconque des revendications 1 à 7, pour la fabrication d'un arbre à came,
- pour lequel les éléments fonctionnels (4) sont agencés et orientés et fixés verticalement les uns au-dessus des autres,
- pour lequel l'arbre (3) est inséré verticalement par le haut au moyen du chariot de guidage (5) mobile par les évidements (2) des éléments fonctionnels (4),
- dans lequel jusqu'à l'atteinte de la première force d'enfoncement maximale le piston pneumatique (7) déplace le chariot de guidage (5) et l'arbre (3) lié à celui-ci,
- dans lequel en cas de dépassement de la première force d'enfoncement maximale les broches (9) assurent la poursuite du déplacement du chariot de guidage (5) et de l'arbre (3).

9. Procédé selon la revendication 8,
**caractérisé en ce que**
- jusqu'à l'atteinte de la première force d'enfoncement maximale le piston pneumatique (7) et les broches (9) sont déplacés uniformément, dans lequel les broches (9) n'exercent aucune force d'enfoncement sur le chariot de guidage (5),
- en cas de dépassement de la première force d'enfoncement maximale les broches (9) tournent encore de sorte que leur tête de broche (12) respective se détache du côté inférieur (13) du chariot de guidage (5).

10. Procédé selon la revendication 9,
**caractérisé en ce que**
le dispositif de détection (16) éteint le dispositif (1) dans la mesure où la première force d'enfoncement maximale est dépassée et/ou les têtes de broche (12) se lèvent du côté inférieur (13) du chariot de guidage (5).

11. Procédé selon la revendication 9,
**caractérisé en ce que**
- le dispositif de détection (16) n'éteint pas le dispositif (1) dans la mesure où la première force d'enfoncement maximale est dépassée et/ou les têtes de broche (12) se détachent du côté inférieur (13) du chariot de guidage (5) de sorte que les broches (9) tournent encore jusqu'à ce qu'elles reposent avec leurs têtes de broche (12) contre le contour de butée respectif (15),
- les broches (9) pressent encore avec leurs têtes de broche (12) le chariot de guidage (5) par le biais des contours de butée (15) jusqu'à une seconde force d'enfoncement maximale prédéfinie et/ou une course de déplacement prédéfinie.

12. Procédé d'assemblage d'éléments fonctionnels (4) présentant respectivement un évidement (2), en particulier des cames, masses de compensation, roues dentées et/ou paliers, sur un arbre (3) au moyen d'un dispositif (1) selon l'une quelconque des revendications 1 à 7, pour la fabrication d'un arbre de commande, pour lequel
- les broches (9) sont déplacées dans une position finale prédéfinie,
- les éléments fonctionnels (4) sont agencés et orientés et fixés verticalement les uns au-dessus des autres,
- l'arbre (3) est inséré verticalement par le haut au moyen du chariot de guidage (5) mobile par les évidements (2) des éléments fonctionnels (4),
- jusqu'à l'atteinte de la première force d'enfoncement maximale le piston pneumatique (7) déplace le chariot de guidage (5) et l'arbre (3) lié à celui-ci.
